# EUROPÄISCHE PATENTSCHRIFT

(11) **EP 0 419 953 B1**
(45) Veröffentlichungstag und Bekanntmachung des Hinweises auf die Patenterteilung: **03.01.1996**
(21) Anmeldenummer: 90117614.9
(22) Anmeldetag: 13.09.1990
(51) Int. Cl.: B29C 45/16

(54) **Vorrichtung zum zweischichtigen Spritzgiessen**
Apparatus for two-layered injection moulding
Dispositif pour le moulage par injection en deux couches

(30) Priorität: 26.09.1989 DE 3932016
(43) Veröffentlichungstag der Anmeldung: 03.04.1991
(73) Patentinhaber: BASF Magnetics GmbH, D-68165 Mannheim (DE)
(72) Erfinder: Riedel, Gerd, D.I., D-8000 München 83 (DE); Lutz, Gottfried, D-8031 Seefeld (DE); Breuer, Rudolf, D-8000 München 21 (DE); Gumplinger, Franz, D-8303 Rottenburg (DE)
(74) Vertreter: Langfinger, Klaus-Dieter, Dr.

(56) Entgegenhaltungen:
- EP-A- 0 152 693
- WO-A-89/04751
- FR-A- 2 572 676
- US-A- 4 726 758
- US-A- 4 840 760

## Beschreibung

Die Erfindung betrifft eine Vorrichtung zum unmittelbar aufeinanderfolgenden Spritzgießen eines aus zwei sich wenigstens teilweise überlappenden Komponenten gebildeten, zwei Teilschichten bildenden flächigen Spritzgußteils, zur Herstellung eines Magnetband-Cassettengehäuses.

In neuerer Zeit ist das Mehrkomponenten-Spritzgießen ein häufig geübtes Verfaren zur Herstellung von Kunststoff-Formteilen wie mehrfarbige Automobil-Rückleuchten, Stoßfänger für Kfz oder Hohlkörper. Die dabei angewandten unterschiedlichen Techniken sind in den Publikationen "Rationalisieren durch Mehrkomponenten-Spritzgießen" (Zeitschrift Kunststoffe, 78, (1988) , S. 665 bis 669 sowie einem Artikel über Mehrfarben-Spritzgießen in der Zeitschrift Plastikverarbeiter 39, (1988), S. 148 bis 152 beschrieben).

Aus dem DE-GM 85 02 378 ist eine Vorrichtung mit mehreren quer zur Werkzeugachse verschiebbaren Formbacken bekannt, bei der ein Vorsprung auf einer der Formbacken in den Hohlraum hineinragt und so eine Trennungslinie für die zwei Komponenten während deren Herstellung liefert. Diese Vorrichtung ist für räumliche Formgegenstände wie Stoßfänger verwendbar, nicht aber für flächige Formen wie Magnetband-Cassettengehäuse. Weiterhin sind Spritzgieß-Vorrichtungen bekannt, bei denen sowohl der düsenseitige wie der auswerferseitige Kern in Richtung der Werkzeugachse bewegt wird. Diese Vorrichtungen bedingen bei der Herstellung von Magnetband-Cassettengehäusen einen komplizierten Werkzeugaufbau und erlauben nicht den Einsatz von Nadelverschlußdüsen mit direktem Anschnitt.

Die EP 0 152 693 beschreibt eine Vorrichtung zur Herstellung eines Magnetband-Cassettengehäuses, bei der angrenzende transparente und opake Gehäuseteile durch aufeinanderfolgendes Spritzgießen mittels einer axial verschiebbaren Formbacke, welche einen gekerbten Rand hat, hergestellt werden. Aus der US 4 726 758 ist eine entsprechende Vorrichtung zum gleichen Zweck beschrieben, bei der ein Vorsprung in der axial verschiebbaren beweglichen Formhälfte in eine entsprechende Ausnehmung der festen Formhälfte eingreift. Aus der EP 0 248 106 ist eine Spritzgießvorrichtung zur Herstellung von Formteilen von drei verschiedenen Kunststoffkomponenten bekannt, bei der eine Schiebersteuerung die Zufuhr der verschiedenen Komponenten regelt.

In der WO 89/04751 wird ein Verfahren zum Herstellen von Kunststoff-Verbundteilen beschrieben, bei welchem von verschiedenen Angußstellen aus mindestens zwei unterschiedliche Reaktionsgemische gleichzeitig oder im zeitlichen Abstand in das Formnest eines Formwerkzeugs eingespritzt werden. Das Formnest ist während der Schußzeit zumindest eines der eingespritzten Reaktionsgemische in zwei oder mehrere gegeneinander abgedichtete Bereiche getrennt. Um dies zu erreichen, ist im Formwerkzeug ein die Trennstelle bildender relativ zum Formnest verschiebbarer Trennschieber oder eine verschiebbare flexible Trenndichtung angeordnet. Im Anschluß an die Schußzeit des einen Reaktionsgemisches wird die Trennung der Formnestbereiche aufgehoben und die zumindest teilweise flüssigen Reaktionsgemische an der Trennstelle zusammengeführt. Mit diesem Verfahren können in einem Arbeitsgang zumindest zwei Werkstoffe mit unterschiedlichen Eigenschaften miteinander verbunden werden.

Aus der FR-A-2 572 676 ist eine Vorrichtung zum Spritzgießen einer zweischichtigen Struktur bekannt, bei welcher zunächst aus einer ersten Öffnung in der festen Formhälfte des Werkzeugs eine Teilschicht und durch Zurückziehen eines beweglichen Kerns eine zweite Öffnung freigegeben wird, welche eine zweite Teilschicht unter die erste Teilschicht spritzt. Dabei hat der bewegliche Kern eine abgeschrägte Unterseite, an der die entsprechend geformte Oberseite eines senkrecht zur Richtung des beweglichen Kerns bewegten Keils entlanggleitet. An der festen Formhälfte befindet sich eine Abstreifplatte, die nach dem Trennen der Formhälften den hergestellten Spritzgußteil durch Druck auf dessen Außenkante ausstößt.

Besonders bei der Herstellung mehrschichtiger Gehäuse für Magnetband-Casseten sind besondere Maßnahmen beim Spritzgießwerkzeug notwendig, um sowohl bestimmte mechanische Eigenschaften, wie verminderte Schwingungsneigung und gute Verbindung der verschiedenen Schichten aufeinander wie auch ein gefälliges Aussehen zu erzielen, wenn beispielsweise das aus dem Stand der Technik bekannte Sichtfenster und das opake Cassettengehäuse durch Zweifachspritzgießen teilweise überlappend hergestellt werden sollen.

Deswegen bestand die Aufgabe, eine Spritzgieß-Vorrichtung der oben genannten gattungsmäßigen Art zu finden, bei der eine bessere Verbindung der beiden Komponenten des Spritzgußteils erreicht wird, wodurch sowohl gute mechanische Eigenschaften wie auch ein gefälliges äußeres Aussehen erreicht wird und wobei die Vorrichtung einfach aufgebaut ist und den Einsatz von Nadelverschluß-Düsen erlaubt.

Erfindungsgemäß wurde die Aufgabe gelöst mit einer Vorrichtung mit den im Anspruch 1 genannten Merkmalen. Weitere Einzelheiten der Erfindung gehen aus den Unteransprüchen, den Zeichnungen und der Beschreibung hervor. Im folgenden wird die Erfindung anhand der Zeichnungen näher erläutert und zwar zeigt
Figur 1a einen Querschnitt durch eine erfindungsgemäße Vorrichtung, bei der der bewegliche Kern im oberen Arbeitspunkt ist
Figur 1b einen entsprechenden Querschnitt, bei dem der bewegliche Kern im unteren Arbeitspunkt ist
Figur 2a Draufsicht auf einen Teil eines Magnetband-Cassettengehäuses mit der ersten Gehäuseteil-Komponente
Figur 2b eine entsprechende Draufsicht, bei der beide Komponenten übereinander gegossen sind.

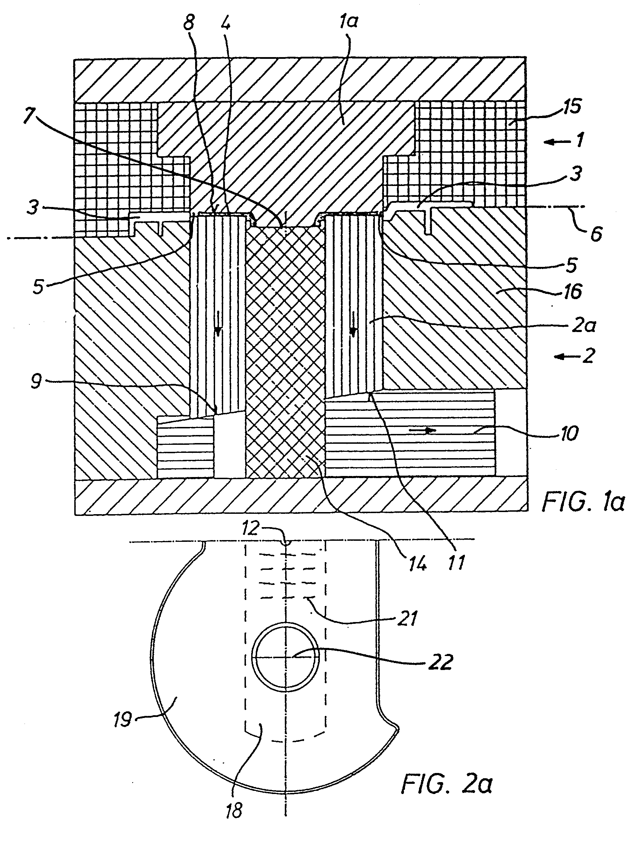

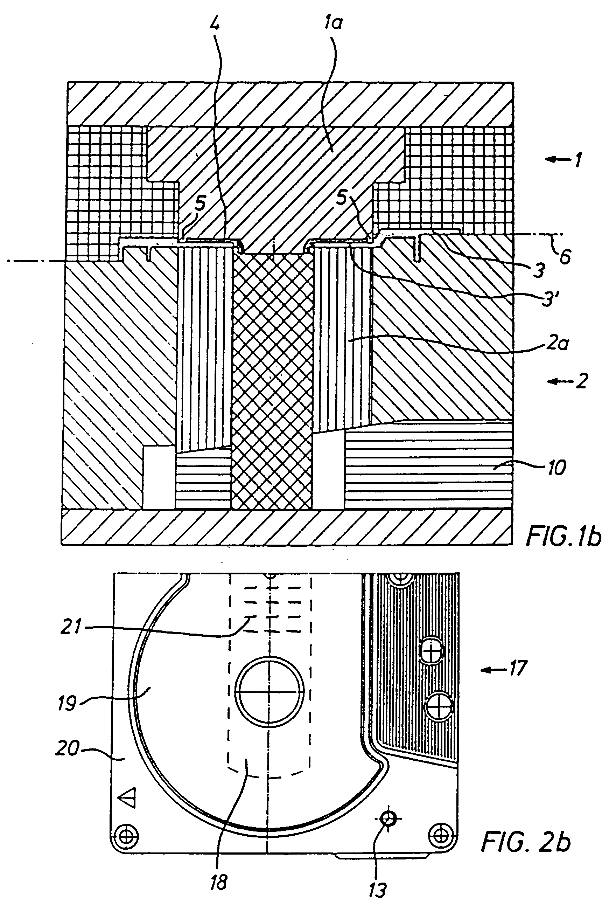

Das erfindungsgemäße Spritzgieß-Werkzeug (Figur 1a) besteht aus einem festen Kern (1a) in der festen Formhälfte (1) und einer beweglichen Formhälfte (2) mit einem beweglichen Kern (2a) und einem festen Kern (14) . Die Kerne sind in die Werkzeugeinsätze (15, 16) eingebaut. Zwischen beiden Formhälften befindet sich in der Trennebene (6) der Formhohlraum (Kavität) (3, 4), der in diesem Fall eine teilweise überlappende zweischichtige Struktur der beiden Komponenten des Formteils ermoglicht. in der Trennebene (6) wird das Werkzeug nach dem Erkalten der Formmassen getrennt und ein (nicht gezeichneter) Auswerfer besorgt das Entfernen des Formteils (17) (Figur 2b) oder ein (ebenfalls nicht gezeichneter) Greifer nimmt das Formteil ab.

Das Spritzgießwerkzeug ist vorzugsweise aufgebaut wie in der DE 36 32 640 beschrieben. Außerdem können durch Einsatz eines Heißkanalverteilers, wie beispielsweise in der DE 36 32 574 beschrieben, mehrere Formteile gleichzeitig hergestellt werden. Erfindungsgemäß hat die Unterseite (7) der festen Formhälfte (1), welche an der Trennebene (6) anliegt, einen umlaufenden Vorsprung (5). Die Herstellung des Formteils geschieht wie im folgenden geschildert.

Zunächst befindet sich der bewegliche Kern (2a) in der oberen Arbeitsstellung (Figur 1a) in der ihre Oberseite (8) an dem Vorsprung (5) des festen Kerns (1a) anstößt. Dieser Vorsprung bildet auf diese Weise eine Dichtleiste zwischen den Formhohlräumen (3, 4) . Nun wird durch eine (nicht gezeichnete) Nadelverschlußdüse über einen Angußpunkt (12) (Figur 2a) die erste Komponente in den Hohlraum (4) gespritzt. Unmittelbar darauf wird der Kern (2a) um etwa eine halbe Wanddicke des Magnetband-Cassettengehäuses in Axialrichtung (Pfeil) nach unten bewegt, so daß er jetzt wie in Figur 1b angeordnet ist. Diese Verschiebung wird über einen radial beweglichen Keil (10) hergestellt, dessen Oberseite (11) abgeschrägt ist, und welcher an der im gleichen Sinn abgeschrägten Unterseite (9) des beweglichen Kerns (2a) anliegt sowie beispielsweise über eine doppel-T-Nut mit dieser verbunden ist. Nun wird in den Hohlraum (3) sowie den neu gebildeten Hohlraum (3') die zweite Komponente über den Angußpunkt (13) (Figur 2b) aus einer (nicht gezeichneten) Nadelverschlußdüse gespritzt. Dadurch wird eine zweischichtige Struktur im Bereich des Hohlraums (3') über des beweglichen Kern (2a) erhalten. Nach dem Trennen und Ausstoßen des Formteils wiederholt sich der Spritzgießvorgang für das nachste Formteil.

Die senkrechte Bewegungsamplitude der beweglichen Formhälfte istg wie bereits ausgeführt, im allgemeinen ungefähr die Hälfte der Gesamtdicke des Cassettengehäuses. Dies ist jedoch nur eine ungefähre Angabe, welche davon abhängt, wie das Verhältnis der Schichtdicken der beiden Teilschichten des Spritzgußformteils gewählt wird.

Wird beispielsweise in den Hohlraum (4) transparentes Polystyrol, technische Bezeichnung PS-Standard, gespritzt und in den Hohlraum (3, 3') schlagzähes Polystyrol SB, in welches Pigmente zum Beispiel Ruß oder Farbstoffe eingelagert sind, gespritzt, so wird im Bereich (18) das transparente Sichtfenster, im Bereich (19) der überlappende zweischichtige Aufbau und im Bereich (20) der rein opake Teil erhalten (Figur 2a, 2b).

Es hat sich gezeigt, daß auf diese Weise Magnetband-Cassettengehäuse in einem Dickenbereich von 1 bis 2 mm mit guten mechanischen Eigenschaften und einem sehr gefälligen Äußeren erhalten werden. Selbstverständlich sind auch Varianten im Rahmen dieser Erfindung möglich, beispielsweise können in der ersten Komponente für den transparenten Teil auch Farbstoffe eingelagert sein, beispielsweise die aus der DE-OS 35 14 967 bekannten fluoreszierenden LISA-Farbstoffe. Diese Maßnahme läßt die in dem Sichtfenster üblicherweise vorhandene Markierung (21) (Figur 2a, 2b) in besonderer Weise optisch hervortreten.

Außerdem ist es möglich, die erfindungsgemäße Vorrichtung als Mehrfachwerkzeug mittels eines Heißkanalverteilers beispielsweise gemäß EP 0 262 490 auszubilden, so daß auf diese Weise gleichzeitig mehrere, beispielsweise acht Cassettengehäuse, so hergestellt werden.

## Patentansprüche

1. Vorrichtung zum unmittelbar aufeinanderfolgenden Spritzgießen eines aus zwei sich wenigstens teilweise überlappenden Komponenten gebildeten, zwei Teilschichten (3, 4) bildenden flächigen spritzgußteils zur Herstellung eines Magnetband-Cassettengehäuses in einem durch eine feste Formhälfte (1) mit einem ersten festen Kern (1a) und eine bewegliche Formhälfte (2) mit einem beweglichen Kern (2a), wobei der bewegliche Kern (2a) um einen zentralen zweiten festen Kern (14) angeordnet und gegen diesen axial verschiebbar ist für die beiden Teilschichten (3,4) bildenden Hohlraum einer Spritzgußform, wobei ein umlaufender Vorsprung (5) an der Außenkante der Unterseite (7) des ersten festen Kerns (1a) angeordnet ist, der eine Dichtleiste gegen die gegenüberliegende Oberseite (8) des beweglichen Kerns (2a) bildet, die Oberseite des zweiten festen Kerns (14) einen Teil des Hohlraumes für die eine Teilschicht begrenzt und die Oberseite des beweglichen Kerns (14) im oberen Arbeitspunkt den Hohlraum für die eine Teilschicht und in unteren Arbeitspunkt den gesamten überlappenden Bereich der beiden Teilschichten (3,4) freigibt, wobei die bewegliche Formhälfte (2) um ungefähr die halbe Gesamtdicke der beiden Teilschichten axial verschiebbar ist.

2. Verfahren zur Herstellung eines Magnetband-Cassettengehäuses nach dem Anspruch 1, dadurch gekennzeichnet, daß zuerst die transparente Komponente und unmittelbar nachfolgend durch axiale Verschiebung des beweglichen Kerns (2a) die opake Komponente des Magnetband-Cassettengehäuses gegossen wird.

## Claims

1. Apparatus for the directly successive injection molding of a sheet-like injection-molded part formed by two at least partially overlapping components, forming two part-layers (3, 4), for producing a magnetic-tape cassette housing in a cavity of an injection mold, which cavity is formed by a fixed mold half (1) with a first fixed core (1a) and a movable mold half (2) with a movable core (2a), the movable core (2a) being arranged around a central second fixed core (14) and being displaceable axially towards the latter, for the two part-layers (3, 4), a peripheral projection (5) being arranged on the outside edge of the underside (7) of the first fixed core (1a) and forming a sealing strip with respect to the opposite upper side (8) of the movable core (2a), the upper side of the second fixed core (14) bounding part of the cavity for the one part-layer and the upper side of the movable core (14) exposing the cavity for the one part-layer at the upper operating point and exposing the entire overlapping region of the two part-layers (3, 4) at the lower operating point, the movable mold half (2) being displaceable axially by approximately half the overall thickness of the two part-layers.

2. A process for producing a magnetic-tape cassette housing as claimed in claim 1, wherein first of all the transparent component of the magnetic-tape cassette housing is molded and directly thereafter, by axial displacement of the movable core (2a), the opaque component of said housing is molded.

## Revendications

1. Dispositif pour le moulage par injection, directement et consécutivement, d'une pièce plane moulée par injection formée de deux composants se recouvrant au moins partiellement, formant deux couches partielles (3, 4), pour la préparation d'un boîtier pour cassettes de bande magnétique en un, au moyen d'un premier demi-moule fixe (1) avec un premier noyau fixe (1a) et d'un demi-moule mobile (2) avec un noyau mobile (2a), tandis que le noyau mobile (2a) est disposé autour d'un second noyau fixe central (14) et est déplaçable axialement par rapport à celui-ci pour les deux couches partielles (3, 4) formant l'espace creux d'un moule pour coulée par injection, tandis qu'est disposé sur le bord externe de la face inférieure (7) du premier noyau fixe (1a) une saillie circulaire (5) formant une bague d'étanchéité contre la face supérieure opposée (8) du noyau mobile (2a), tandis que la face supérieure du second noyau fixe (14) limite une partie de l'espace creux pour la couche partielle et que la face supérieure du noyau mobile (14) libère dans le point de fonctionnement supérieur l'espace creux pour la couche partielle et dans le point de fonctionnement inférieur l'ensemble du domaine se recouvrant des deux couches partielles (3, 4), et tandis que le demi-moule mobile (2) peut être déplacé axialement autour d'environ la moitié de l'épaisseur totale des deux couches partielles.

2. Procédé pour la production d'un boîtier pour cassette de bande magnétique selon la revendication 1 , caractérisé en ce qu'on coule d'abord le composant transparent et immédiatement ensuite par déplacement axial du noyau mobile (2a) le composant opaque du boîtier pour cassette de bande magnétique.
